# EUROPÄISCHE PATENTSCHRIFT

(11) **EP 3 765 760 B1**
(45) Veröffentlichungstag und Bekanntmachung des Hinweises auf die Patenterteilung: **04.01.2023**
(21) Anmeldenummer: 19708935.2
(22) Anmeldetag: 21.02.2019
(51) Int. Cl.: F16D 21/06, F16D 23/14, F16D 25/08

(54) **ZENTRALAUSRÜCKLAGER FÜR KUPPLUNGSSYSTEM UND KUPPLUNGSSYSTEM**
CENTRAL CLUTCH-RELEASE BEARING FOR CLUTCH SYSTEM, AND CLUTCH SYSTEM
PALIER DE DÉBRAYAGE CENTRAL POUR SYSTÈME D'EMBRAYAGE ET SYSTÈME D'EMBRAYAGE

(30) Priorität: 13.03.2018 DE 102018105746
(43) Veröffentlichungstag der Anmeldung: 20.01.2021
(73) Patentinhaber: Schaeffler Technologies AG & Co. KG, 91074 Herzogenaurach (DE)
(72) Erfinder: REUTTER, Doris Maria, 77883 Ottenhöfen (DE); WAGNER, Philippe, 67460 Souffelweyersheim (FR); ORTMANN, Simon, 76532 BAden-Baden (DE); GRAUSS, Aurelien, 67670 Mommenheim (FR)
(86) Internationale Anmeldenummer: PCT/DE2019/100169
(87) Internationale Veröffentlichungsnummer: WO 2019/174667

(56) Entgegenhaltungen:
- DE-A1-102011 115 958
- DE-A1-102015 213 516
- US-A1- 2014 069 763

## Beschreibung

Die vorliegende Erfindung betrifft ein Zentralausrücklager für ein Kupplungssystem. Das Zentralausrücklager umfasst ein Gehäuse, das einen ersten ringförmigen Zylinder und einen zweiten ringförmigen Zylinder ausgebildet hat. Ein erster Ringkolben ist im ersten ringförmigen Zylinder geführt. Ein zweiter Ringkolben ist im zweiten ringförmigen Zylinder geführt. Der erste Ringkolben ist mit einem ersten Ausrücklager und der zweite Ringkolben ist mit einem zweiten Ausrücklager in Wirkzusammenhang.

Ferner betrifft die vorliegende Erfindung ein Kupplungssystem, das eine Doppelkupplung und eine Trennkupplung umfasst. Ein Ringkolben ist dabei mit einem Ausrücklager der Trennkupplung in Wirkzusammenhang, Ein erster Ringkolben ist mit einem Ausrücklager einer ersten Teilkupplung der Doppelkupplung in Wirkzusammenhang. Ebenso ist ein zweiter Ringkolben mit einem Ausrücklager einer zweiten Teilkupplung der Doppelkupplung in Wirkzusammenhang. Ferner ist ein Gehäuse vorgesehen, in dem der erste Ringkolben und der zweite Ringkolben in einer axialen Richtung beweglich sind.

Die deutsche Offenlegungsschrift DE 10 2016 219 684 A1 offenbart ein Betätigungssystem zum Ein- und/oder Ausrücken einer Kupplung eines Kraftfahrzeugantriebsstrangs. Der hier offenbarte Kupplungsnehmerzylinder ist für eine Doppelkupplung geeignet und besitzt zwei Zylinder, die jeweils an einem Ende ein Betätigungslager tragen. Das Betätigungslager ist dabei jeweils als ringförmiges Schrägkugellager ausgebildet.

Aus der DE 10 2011 115 958 A1 ist ein Zentralausrücklager nach dem Oberbegriff des Anspruchs 1 offenbart. Weiterer Stand der Technik ist in der DE 10 2015 213 516 A1 sowie der US 2014/069 763 A1 offenbart.

Der Erfindung liegt die Aufgabe zugrunde, ein Zentralausrücklager zu schaffen, das in axialer Richtung einen reduzierten Bauraum beansprucht.

Diese Aufgabe wird durch ein Zentralausrücklager für ein Kupplungssystem gelöst, das die Merkmale des Anspruchs 1 umfasst.

Eine weitere Aufgabe der Erfindung ist, ein Kupplungssystem mit einer Doppelkupplung und einer Trennkupplung zu schaffen, das einen in axialer Richtung reduzierten Bauraum aufweist.

Diese Aufgabe wird durch ein Kupplungssystem mit einer Doppelkupplung und einer Trennkupplung gelöst, das die Merkmale des Anspruchs 6 umfasst.

Das erfindungsgemäße Zentralausrücklager für ein Kupplungssystem umfasst ein Gehäuse, in dem mindestens zwei erste Zylinder und ein zweiter ringförmiger Zylinder ausgebildet sind. Jeweils ein erster Kolben ist in jedem der ersten Zylinder geführt. Ebenso ist ein zweiter Kolben, der als Ringkolben ausgebildet sein kann, im zweiten ringförmigen Zylinder geführt. Jeder erste Kolben ist mit einem ersten Ausrücklager in Wirkzusammenhang. Der zweite Kolben ist mit einem zweiten Ausrücklager in Wirkzusammenhang. Das erste Ausrücklager und/oder das zweite Ausrücklager sind als Nadellager ausgebildet. Eine bevorzugte Ausführungsform ist, dass das Nadellager den äußeren, also mehreren ersten, Zylindern und das Schrägkugellager dem inneren, also zweiten, ringförmigen Zylinder zugeordnet ist. Eine besonders bevorzugte Ausführungsform ist, dass das erste Ausrücklager und das zweite Ausrücklager als Nadellager ausgebildet sind.

Bereits durch die Ausbildung des ersten Ausrücklagers oder des zweiten Ausrücklagers als Nadellager, erzielt man den Vorteil der Reduzierung des Bauraums des Zentralausrücklagers in axialer Richtung. Selbstverständlich kann der Bauraum in axialer Richtung durch die Ausbildung des ersten Ausrücklagers und des zweiten Ausrücklagers in Form von Nadellagern weiter reduziert werden.

Das zweite Ausrücklager ist ein Schrägkugellager, wenn das erste Ausrücklager ein Nadellager ist. Ebenso kann das erste Ausrücklager ein Schrägkugellager sein, wenn das zweite Ausrücklager ein Nadellager ist.

Das als Nadellager ausgebildete zweite Ausrücklager liegt unmittelbar flächig auf jedem der ersten Kolben. Der zweite Kolben oder die zusätzlich benötigte
Stahlscheibe können einen radial umlaufenden Anschlag ausgebildet haben. An dem radial umlaufenden Anschlag liegt somit das als Nadellager ausgebildete zweite Ausrücklager an.

Das Gehäuse des Zentralausrücklagers ist einstückig aus einem Kunststoff hergestellt. Dies hat den Vorteil, dass das Gehäuse des Zentralausrücklagers in einem Spritzgussprozess hergestellt werden kann. Somit entfallen aufwändige Umformungen oder Fräsungen, wenn das Gehäuse des Zentralausrücklagers aus Stahlblech hergestellt oder gegossen worden wäre. Ebenso kann das Gehäuse des Zentralausrücklagers einstückig aus Aluminium hergestellt sein. Mit einem Aluminiumdruckguss kann das Gehäuse geformt werden.

Das Zentralausrücklager kann drehfest an eine Getriebeglocke montiert sein.

Das Kupplungssystem umfasst eine Doppelkupplung und eine Trennkupplung. Dabei steht ein Ringkolben mit einem Ausrücklager der Trennkupplung in Wirkzusammenhang. Mindestens zwei erste Kolben stehen dabei mit einem Ausrücklager einer ersten Teilkupplung der Doppelkupplung in Wirkzusammenhang. Weiter steht ein zweiter Kolben mit einem Ausrücklager einer zweiten Trennkupplung der Doppelkupplung in Wirkzusammenhang. Ferner ist ein Gehäuse vorgesehen, in dem die mindestens zwei ersten Kolben und der zweite Kolben in einer axialen Richtung beweglich sind. Erfindungsgemäß ist das Ausrücklager der ersten Teilkupplung und/oder das Ausrücklager der zweiten Teilkupplung als ein Nadellager ausgebildet. Dies hat den Vorteil, dass dadurch auch das Kupplungssystem, welches aus der Doppelkupplung und der Trennkupplung besteht, in axialer Richtung kleiner gebaut werden kann.

Ebenso liegt das als Nadellager ausgebildete erste Ausrücklager flächig auf dem Anbauteil, das ein Distributionsblech ist, auf. Das Anbauteil ist mit den mindestens zwei ersten Kolben verbunden. Ebenso hat das Anbauteil einen radial umlaufenden Anschlag ausgebildet, an dem das als Nadellager ausgebildete erste Ausrücklager anliegt. Das als Nadellager ausgebildete zweite Ausrücklager liegt flächig auf dem zweiten Kolben auf. An dem zweiten Kolben ist ein radial umlaufender Anschlag ausgebildet, an dem das als Nadellager ausgebildete zweite Ausrücklager anliegt.

Die Erfindung und ihre Vorteile werden nachstehend anhand der beigefügten Zeichnungen zu Ausführungsbeispielen näher erläutert. Die Erfindung ist dabei nicht auf die gezeigten und beschriebenen Ausführungsbeispiele beschränkt. Im Einzelnen zeigt:
- Figur 1: ein Zentralausrücklager gemäß dem Stand der Technik mit mehreren ringförmigen Betätigungskolben;
- Figur 2: einen Teilschnitt durch ein Kupplungssystem mit einer Doppelkupplung und einer Trennkupplung;
- Figur 3: eine Teilansicht des Zentralausrücklagers, bei dem das erste Ausrücklager als Nadellager ausgebildet ist; und
- Figur 4: eine Teilansicht des Zentralausrücklagers, bei dem das zweite Ausrücklager als Nadellager ausgebildet ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

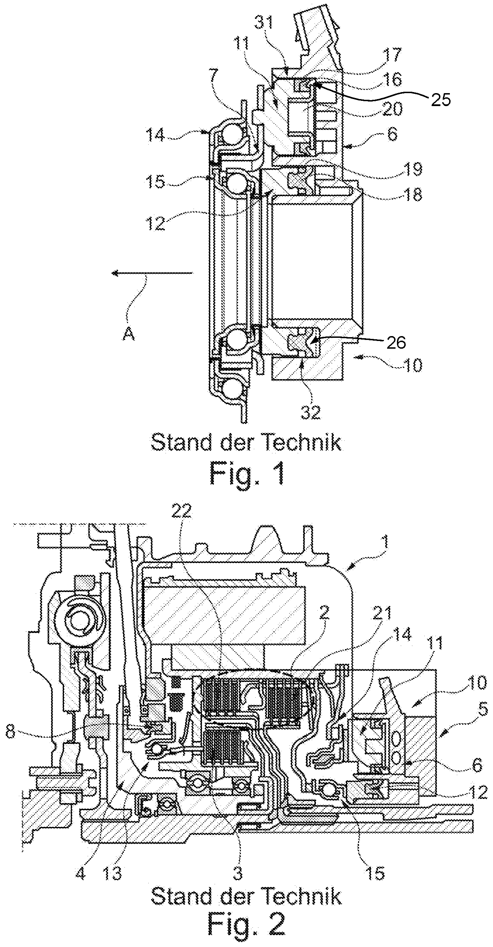

Figur 1 zeigt eine Schnittansicht eines Zentralausrücklagers 10 gemäß dem Stand der Technik. Das Zentralausrücklager 10 umfasst ein Gehäuse 6, in dem mindestens zwei erste Zylinder 31 und zumindest ein zweiter ringförmiger Zylinder 32 ausgebildet sind. In jedem der mindestens zwei Zylinder 31 ist jeweils ein erster Kolben 11 in axialer Richtung A geführt. In dem zweiten ringförmigen Zylinder 32 ist ein zweiter Kolben 12 (Ringkolben) in axialer Richtung A geführt. Jeder der Kolben 11 wirkt dabei über ein speziell gestaltetes Anbauteil 7 auf ein erstes Ausrücklager 14 und der Ringkolben 12 wirkt dabei direkt auf das zweite Ausrücklager 15.

Jeder erste Kolben 11 ist mit einer Dichtung 16 versehen, die in einer Armierung 17 sitzt und den Kolben 11 gegenüber einem Druckraum 25 eines jeden ersten Zylinders 31 abdichtet. In das Gehäuse 6 des Zentralausrücklagers 10 ist ein Dichtungshaltering 20 eingepresst. Ebenso ist der zweite Kolben 12 mit einer Dichtung 18 versehen, die ebenfalls von einer Armierung 19 stabilisiert wird. Die Dichtung 16 eines jeden ersten Kolbens 11 wirkt dabei dichtend mit dem zugehörigen ersten Zylinder 31 zusammen. Ebenso wirkt die Dichtung 18 des zweiten Kolbens 12 dichtend mit dem zweiten ringförmigen Zylinder 32 zusammen. Die Dichtung 18 dichtet den zweiten Kolben 12 gegenüber einem Druckraum 26 des zweiten ringförmigen Zylinders 32 ab.

Bevorzugt hat das Gehäuse 6 drei erste Zylinder 31 ausgeformt, in denen jeweils ein als Ringkolben ausgebildeter Kolben 11 geführt ist, der exzentrisch zum zweiten Kolben 12 zur Betätigung des zweiten Ausrücklagers 15 angeordnet ist. Insbesondere ist der zweite Kolben 12 zur Betätigung des zweiten Ausrücklagers 15 angeordnet und die drei ersten Zylinder 31 für die drei Kolben 11 sind gleichmäßig über den Umfang eines Kreises verteilt um den zweiten Kolben 12 angeordnet. Die Kolben 11 in den ersten Zylindern 31 betätigen zusammen bei einer axialen Verlagerung das erste Ausrücklager 14. Dazu sind die Kolben 11, die mit dem ersten Ausrücklager 14 zusammenwirken, an einem gehäusefernen Ende mit dem Anbauteil 7 (Distributionsblech) verbunden, das wiederum in Wirkverbindung mit dem ersten Ausrücklager 14 ist.

Figur 2 zeigt einen Teilschnitt durch ein Kupplungssystem 1. Das Kupplungssystem 1 umfasst eine Doppelkupplung 2 und eine Trennkupplung 3. Die Doppelkupplung 2 besteht aus einer ersten Teilkupplung 21 und einer zweiten Teilkupplung 22. Das Zentralausrücklager 10 wirkt dabei mit den mindestens zwei erste Kolben 11 auf das erste Ausrücklager 14 und mit dem zweiten Kolben 12 auf das zweite Ausrücklager 15. Hier sind das erste Ausrücklager 14 und das zweite Ausrücklager 15 in Form von Schrägkugellagern ausgebildet. Das Gehäuse 6 des Zentralausrücklagers 10 ist mit dem Getriebegehäuse 5 (Getriebeglocke) verbunden. Die Trennkupplung 3 des Kupplungssystems 1 kann über einen Ringkolben 8 betätigt werden, der im Kupplungsdeckel 4 vorgesehen ist. Der Ringkolben 8 wirkt dabei auf das Ausrücklager 13 für die Trennkupplung 3. Das Ausrücklager 13 für die Trennkupplung 3 ist in Form eines Schrägkugellagers ausgebildet.

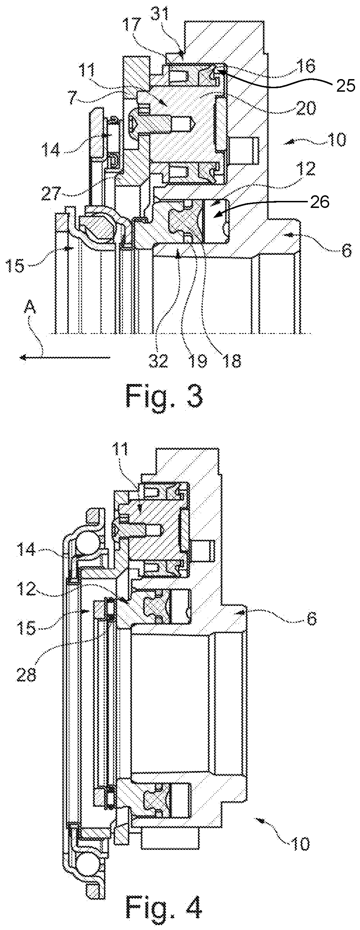

Figur 3 zeigt eine Teilansicht des erfindungsgemäßen Zentralausrücklagers 10, bei der das erste Ausrücklager 14 als Nadellager ausgebildet ist. Das zweite Ausrücklager 15 ist als Schrägkugellager ausgebildet. Die in Figur 3 gezeigte Ausführungsform ist die wahrscheinlichste. So ist also das Nadellager den äußeren, also ersten, Zylindern 31 und das Schrägkugellager dem inneren, also zweiten, ringförmigen Zylinder 32 zugeordnet. Wie bereits in der Beschreibung zu Figur 1 erwähnt, hat das Gehäuse 6 des Zentralausrücklagers 10 mindestens zwei erste Zylinder 31 und einen zweiten ringförmigen Zylinder 32 ausgebildet. In jedem der ersten Zylinder 31 ist der als Ringkolben ausgebildete Kolben 11 in axialer Richtung A geführt. Jeder erste Kolben 11 besitzt dabei einen Dichtungshaltering 20, auf dem die Armierung 17 für die Dichtung 16 sitzt. An jedem der ersten Kolben 11 ist ein Anbauteil 7 vorgesehen, auf dem das erste Ausrücklager 14, welches das Nadellager ist, aufliegt. Das Anbauteil 7 ist bei der hier dargestellten Ausführungsform als Distributionsblech ausgebildet. Ferner hat das Anbauteil 7 einen Anschlag 27 ausgebildet, an dem ebenfalls das erste Ausrücklager 14 in Form des Nadellagers anliegt. Der zweite Kolben 12, welcher in einem zweiten ringförmigen Zylinder 32 in axialer Richtung A beweglich ist, wirkt direkt mit dem zweiten Ausrücklager 15 zusammen, das in dieser Ausführungsform als Schrägkugellager ausgebildet ist. Der zweite Kolben 12 weist ebenfalls eine Dichtung 18 auf, die durch eine Armierung 19 stabilisiert wird. Die Dichtung 16 eines jeden ersten Kolbens 11 dichtet somit jeden der ersten Kolben 11 gegenüber dem zugeordneten Zylinder 31 und dem Druckraum 25 ab. Ebenso dichtet die Dichtung 18 den zweiten Kolben 12 gegenüber dem zweiten ringförmigen Zylinder 32 und dem Druckraum 26 ab.

Figur 4 zeigt in einer Schnittansicht des Zentralausrücklagers 10 eine mögliche weitere Ausführungsform der Erfindung. Hier ist das zweite Ausrücklager 15 als Nadellager ausgebildet. Das Nadellager 15 liegt somit direkt auf dem zweiten Kolben 12 auf. Der zweite Kolben 12 hat ebenfalls einen Anschlag 28 ausgebildet, an dem das Nadellager anliegt. Bei der hier dargestellten Ausführungsform ist das erste Ausrücklager 14 in Form eines Schrägkugellagers ausgebildet. Das erste Ausrücklager 14 wird von den mindestens zwei Kolben 11 betätigt.

Es ist ebenfalls selbstverständlich, dass gemäß der Erfindung sowohl das erste Ausrücklager 14, als auch das zweite Ausrücklager 15 in Form von Nadellagern ausgebildet sein können. Dies hat den Vorteil, dass dadurch die Bauraumlänge in axialer Richtung A des Zentralausrücklagers 10 weiter reduziert werden kann.

### Bezugszeichenliste

- 1: Kupplungssystem
- 2: Doppelkupplung
- 3: Trennkupplung
- 4: Kupplungsdeckel
- 5: Getriebegehäuse
- 6: Gehäuse Zentralausrücklager
- 7: Anbauteil
- 8: Ringkolben
- 10: Zentralausrücklager
- 11: erster Kolben
- 12: zweiter Kolben
- 13: Ausrücklager Trennkupplung
- 14: erstes Ausrücklager
- 15: zweites Ausrücklager
- 16: Dichtung
- 17: Armierung
- 18: Dichtung
- 19: Armierung
- 20: Dichtungshaltering
- 21: erste Teilkupplung
- 22: zweite Teilkupplung
- 25: Druckraum
- 26: Druckraum
- 27: Anschlag
- 28: Anschlag
- 31: erster Zylinder
- 32: zweiter ringförmiger Zylinder
- A: axiale Richtung

## Patentansprüche

1. Zentralausrücklager (10) für ein Kupplungssystem (1), umfassend: ein Gehäuse (6), das mindestens zwei erste Zylinder (31) und einen zweiten ringförmigen Zylinder (32) ausgebildet hat; wobei jeweils ein erster Kolben (11) in jedem der ersten Zylinder (31) geführt ist und ein zweiter Kolben (12) im zweiten ringförmigen Zylinder (32) geführt ist, wobei jeder erste Kolben (11) mit einem ersten Ausrücklager (14) und der zweite Kolben (12) mit einem zweiten Ausrücklager (15) in Wirkzusammenhang ist, **dadurch gekennzeichnet, dass** das erste Ausrücklager (14) und/oder das zweite Ausrücklager (15) jeweils als ein Nadellager ausgebildet sind, wobei das erste Ausrücklager (14) unmittelbar flächig auf jedem der ersten Kolben (11) aufliegt, wenn das erste Ausrücklager (14) als Nadellager ausgebildet ist, und wobei das zweite Ausrücklager (15) unmittelbar flächig auf dem zweiten Kolben (12) aufliegt, wenn das zweite Ausrücklager (15) als Nadellager ausgebildet ist.

2. Zentralausrücklager (10) nach Anspruch 1, wobei das zweite Ausrücklager (15) ein Schrägkugellager ist, wenn das erste Ausrücklager (14) ein Nadellager ist oder wobei das erste Ausrücklager (14) ein Schrägkugellager ist, wenn das zweite Ausrücklager (15) ein Nadellager ist.

3. Zentralausrücklager (10) nach Anspruch 1, wobei der zweite Kolben (12) einen radial umlaufenden Anschlag (28) ausgebildet hat, an dem das als Nadellager ausgebildete zweite Ausrücklager (15) anliegt.

4. Zentralausrücklager (10) nach einem der vorangehenden Ansprüche, wobei das Gehäuse (6) des Zentralausrücklagers (10) einstückig aus einem Kunststoff oder Aluminium hergestellt ist.

5. Zentralausrücklager (10) nach einem der vorangehenden Ansprüche, wobei das Zentralausrücklager (10) am Getriebegehäuse (5) montiert ist.

6. Kupplungssystem (1) mit einer Doppelkupplung (2) und einer Trennkupplung (3), umfassend einen Ringkolben (8), der mit einem Ausrücklager (13) der Trennkupplung (3) in Wirkzusammenhang steht, sowie einem Zentralausrücklager (10) nach einem der vorstehenden Ansprüche 1 bis 8, wobei das erste Ausrücklager (14) zu einer ersten Teilkupplung (21) der Doppelkupplung (2) gehört und das zweite Ausrücklager (15) zu einer zweiten Teilkupplung (22) der Doppelkupplung (2) gehört und die Kolben (11, 12) in einer axialen Richtung (A) beweglich sind.

## Claims

1. A central clutch-release bearing (10) for a clutch system (1), comprising: a housing (6), formed with at least two first cylinders (31) and a second annular cylinder (32); wherein a first piston (11) is guided in each of the first cylinders (31) and a second piston (12) is guided in the second annular cylinder (32), wherein each first piston (11) is operatively connected with a first clutch-release bearing (14) and the second piston (12) is operatively connected with a second clutch-release bearing (15), **characterized in that** the first clutch-release bearing (14) and/or the second clutch-release bearing (15) are each designed as a needle bearing, wherein the first clutch-release bearing (14) rests directly flat on each of the first pistons (11) when the first clutch-release bearing (14) is designed as a needle bearing, and wherein the second clutch-release bearing (15) rests directly flat on the second piston (12) when the second clutch-release bearing (15) is designed as a needle bearing.

2. The central clutch-release bearing (10) according to claim 1, wherein the second clutch-release bearing (15) is an angular contact ball bearing when the first clutch-release bearing (14) is a needle bearing or wherein the first clutch-release bearing (14) is an angular contact ball bearing when the second clutch-release bearing (15) is a needle bearing.

3. The central clutch-release bearing (10) according to claim 1, wherein the second piston (12) is formed with a radially circumferential stop (28) against which the second clutch-release bearing (15), which is designed as a needle bearing, rests.

4. The central clutch-release bearing (10) according to any one of the preceding claims, wherein the housing (6) of the central clutch-release bearing (10) is made in one piece from a plastic or aluminium.

5. The central clutch-release bearing (10) according to any one of the preceding claims, wherein the central clutch-release bearing (10) is mounted on the transmission housing (5).

6. A clutch system (1) with a double clutch (2) and a separating clutch (3), comprising an annular piston (8) operatively connected with a clutch-release bearing (13) of the separating clutch (3), and a central clutch-release bearing (10) according to any one of the preceding claims 1 to 8, wherein the first clutch-release bearing (14) belongs to a first partial clutch (21) of the double clutch (2) and the second clutch-release bearing (15) belongs to a second partial clutch (22) of the double clutch (2) and the pistons (11, 12) are movable in an axial direction (A).

## Revendications

1. Palier de débrayage central (10) pour un système d'embrayage (1), comprenant : un boîtier (6) sur lequel sont formés au moins deux premiers cylindres (31) et un second cylindre annulaire (32) ; respectivement un premier piston (11) étant guidé dans chacun des premiers cylindres (31) et un second piston (12) étant guidé dans le second cylindre annulaire (32), chaque premier piston (11) étant en liaison fonctionnelle avec un premier palier de débrayage (14) et le second piston (12) avec un second palier de débrayage (15), **caractérisé en ce que** le premier palier de débrayage (14) et/ou le second palier de débrayage (15) sont chacun réalisés sous forme de palier à aiguilles, le premier palier de débrayage (14) reposant directement à plat sur chacun des premiers pistons (11) lorsque le premier palier de débrayage (14) est réalisé sous forme de palier à aiguilles et le second palier de débrayage (15) reposant directement à plat sur le second piston (12) lorsque le second palier de débrayage (15) est réalisé sous forme de palier à aiguilles.

2. Palier de débrayage central (10) selon la revendication 1, dans lequel le second palier de débrayage (15) est un roulement à billes à contact oblique lorsque le premier palier de débrayage (14) est un palier à aiguilles ou dans lequel le premier palier de débrayage (14) est un roulement à billes à contact oblique lorsque le second palier de débrayage (15) est un palier à aiguilles.

3. Palier de débrayage central (10) selon la revendication 1, dans lequel sur le second piston (12) est formée une butée radialement circonférentielle (28) sur laquelle repose le second palier de débrayage (15) réalisé sous forme de palier à aiguilles.

4. Palier de débrayage central (10) selon l'une quelconque des revendications précédentes, dans lequel le boîtier (6) du palier de débrayage central (10) est fabriqué d'une seule pièce en matière plastique ou en aluminium.

5. Palier de débrayage central (10) selon l'une quelconque des revendications précédentes, le palier de débrayage central (10) étant monté sur le boîtier de transmission (5).

6. Système d'embrayage (1) comportant un double embrayage (2) et un embrayage de coupure (3), comprenant un piston annulaire (8) qui est en liaison fonctionnelle avec un palier de débrayage (13) de l'embrayage de coupure (3) et avec un palier de débrayage central (10) selon l'une quelconque des revendications précédentes 1 à 8, dans lequel le premier palier de débrayage (14) appartient à une première partie d'embrayage (21) du double embrayage (2) et le second palier de débrayage (15) appartient à une seconde partie d'embrayage (22) du double embrayage (2) et les pistons (11, 12) sont mobiles dans une direction axiale (A).
